# EUROPEAN PATENT SPECIFICATION

(11) **EP 2 108 667 B1**
(45) Date of publication and mention of the grant of the patent: **29.03.2017**
(21) Application number: 08704270.1
(22) Date of filing: 31.01.2008
(51) Int. Cl.: C08F 290/12, C08F 8/30, C08F 290/06, C08F 290/14, C08G 18/62, C08G 18/67, C09D 4/00

(54) **CURABLE RESIN COMPOSITION AND METHOD FOR PRODUCING THE SAME**
HÄRTBARE HARZZUSAMMENSETZUNG UND HERSTELLUNGSVERFAHREN DAFÜR
COMPOSITION DE RÉSINE DURCISSABLE ET SON PROCÉDÉ DE FABRICATION

(30) Priority: 02.02.2007 JP 2007024281
(43) Date of publication of application: 14.10.2009
(73) Proprietor: Daikin Industries, Ltd., Osaka 530-8323 (JP)
(72) Inventor: TANAKA, Yoshito, Settsu-shi Osaka 566-8585 (JP); ANDO, Yoshito, Settsu-shi Osaka 566-8585 (JP)
(74) Representative: Hoffmann Eitle
(86) International application number: PCT/JP2008/051523
(87) International publication number: WO 2008/093776

(56) References cited:
- EP-A1- 1 460 091
- JP-A- 05 163 318
- JP-A- 05 262 848
- JP-A- 08 231 849
- JP-A- 62 158 711
- JP-A- 63 301 268
- JP-A- 2003 183 322
- JP-A- 2003 192 749
- JP-A- 2006 131 809
- JP-A- 2006 307 028
- DATABASE WPI Week 198710 Thomson Scientific, London, GB; AN 1987-070244 XP002591349 & JP 62 025104 A (ASAHI GLASS CO LTD) 3 February 1987 (1987-02-03)

## Description

### TECHNICAL FIELD

The present invention relates to a curable resin composition comprising a reaction product of a fluorine-containing copolymer having hydroxyl group and an isocyanate group-containing unsaturated compound and an acrylic monomer, and to a preparation process thereof.

### BACKGROUND ART

So far a composition of a curable fluorine-containing polymer having ethylenic carbon-carbon double bond at its end has been proposed as a curable resin composition comprising a fluorine-containing polymer (cf. WO 02/18457). Also, there is known a curable resin composition which is prepared by dispersing, in a solvent, a graft copolymer obtained by solution polymerization of an isocyanate group-containing acrylic monomer in a xylene solvent containing a reaction product of a fluorine-containing copolymer having hydroxyl group and the isocyanate group-containing acrylic monomer and is used as a coating composition (cf. JP62-25104A).

EP-A-1 460 091 discloses a fluoropolymer containing an ethylenically unsaturated group, which fluoropolymer is obtained by reacting a compound containing one isocyanate group and at least one ethylenically unsaturated group, and a hydroxyl group-containing fluoropolymer at an isocyanate group/hydroxyl group molar ratio of 1.1 to 1.9.

JP-A-62-025104 relates to a method of producing a polymer having unsaturated groups, comprising reacting a fluorine-containing polymer having hydroxyl groups and an unsaturated compound having one isocyanate compound and at least one additional polymerizable unsaturated group, wherein the number ratio of the isocyanate to hydroxyl groups is 0.01-1.

### DISCLOSURE OF INVENTION

It is an object of the present invention to provide a curable resin composition being moldable even without containing an organic solvent, and a preparation process thereof.

The present invention relates to a composition, which has a viscosity at 25°C of 5-100,000 mPa.s, measured with an oscillation type viscosimeter SV-10 (Kabushiki Kaisha A&D), and which is a curable resin composition comprising
(i) an acrylic monomer (B) and, dissolved therein
(ii) a reaction product (A) of
   - a copolymer (A-1)comprising a fluoroolefin unit and a radically polymerizable hydroxyl group-containing unsaturated monomer unit, and
   - a compound (A-2) having one isocyanate group and at least one radically polymerizable unsaturated group; and
the composition does not contain an organic solvent not having a radically reactive group.

The present invention further relates to a process for preparing the above composition, comprising the steps of
(i) dissolving a copolymer (A-1) and a compound (A-2) as defined in claim 1 in an acrylic monomer (B) without using an organic solvent not having a radically reactive group, and
(ii) reacting copolymer (A-1) with compound (A-2) in the acrylic monomer (B).

Preferred embodiments of the invention are as disclosed in the following detailed description and/or the appended dependent claims.

### BEST MODE FOR CARRYING OUT THE INVENTION

The curable resin composition of the present invention comprises (A) the reaction product of the fluorine-containing copolymer (A-1) having hydroxyl group and comprising a fluoroolefin unit and a radically polymerizable hydroxyl group-containing unsaturated monomer unit and the isocyanate group-containing unsaturated compound (A-2) having one isocyanate group and at least one radically polymerizable unsaturated group and (B) the acrylic monomer.

Examples of the fluoroolefin unit in the fluorine-containing copolymer (A-1) having hydroxyl group are one or more of a tetrafluoroethylene (TFE) unit, a chlorotrifluoroethylene (CTFE) unit, a vinyl fluoride (VF) unit, a vinylidene fluoride (VdF) unit, a hexafluoropropylene (HFP) unit, a trifluoroethylene (TrFE) unit, and perfluoro(alkyl vinyl ether) (PAVE) units. Examples of the PAVE units are a perfluoro(methyl vinyl ether) unit and a perfluoro(propyl vinyl ether) unit.

Examples of a combination of two or more units comprising a TFE unit are a TFE/HFP unit, a TFE/PAVE unit, a TFE/ethylene unit, a TFE/vinyl ether unit, a TFE/vinyl ester unit, a TFE/vinyl ester/vinyl ether unit and a TFE/vinyl ether/allyl ether unit. Among these, from the viewpoint of satisfactory mixing to the ethylenically unsaturated group-containing monomer, a TFE/ethylene unit, a TFE/vinyl ether unit, a TFE/vinyl ester unit, a TFE/vinyl ester/vinyl ether unit and a TFE/vinyl ether/allyl ether unit are preferred.

Examples of a combination of two or more units comprising a CTFE unit are a CTFE/HFP unit, a CTFE/PAVE unit, a CTFE/ethylene unit, a CTFE/vinyl ether unit, a CTFE/vinyl ester unit, a CTFE/vinyl ester/vinyl ether unit and a CTFE/vinyl ether/allyl ether unit. Among these, from the viewpoint of satisfactory mixing to the ethylenically unsaturated group-containing monomer, a CTFE/ethylene unit, a CTFE/vinyl ether unit, a CTFE/vinyl ester unit, a CTFE/vinyl ester/vinyl ether unit and a CTFE/vinyl ether/allyl ether unit are preferred.

Similarly, examples of a combination of two or more units comprising a HFP unit are a CTFE/HFP unit, a TFE/HFP unit, a HFP/vinyl ether unit, a HFP/vinyl ester unit, a HFP/vinyl ester/vinyl ether unit and a HFP/vinyl ether/allyl ether unit. Among these, from the viewpoint of satisfactory mixing to the ethylenically unsaturated group-containing monomer, a HFP/vinyl ether unit, a HFP/vinyl ester unit, a HFP/vinyl ester/vinyl ether unit and a HFP/vinyl ether/allyl ether unit are preferred.

Examples of a combination of two or more units comprising a VdF unit are a VdF/TFE unit, a VdF/HFP unit, a VdF/TFE/HFP unit, a VdF/CTFE unit, a VdF/TFE/PAVE unit, a VdF/CTFE/TFE unit and a VdF/CTFE/HFP unit. Among these, from the viewpoint of satisfactory mixing to the ethylenically unsaturated group-containing monomer, it is preferable that a VdF unit is contained in an amount of not less than 50 % by mole in the polymer.

Examples of the radically polymerizable hydroxyl group-containing unsaturated monomer unit in the fluorine-containing copolymer (A-1) having hydroxyl group are hydroxyalkyl vinyl ether and hydroxyalkyl allyl ether represented by the formula (I): 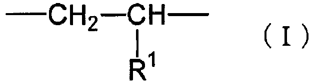 wherein, R¹ is -OR² or -CH₂OR² where R² is an alkyl group having hydroxyl group. Examples of R² are linear or branched alkyl groups having 1-8 carbon atoms in which 1-3 hydroxyl groups, preferably one hydroxyl group is bonded. Examples thereof are 2-hydroxyethyl vinyl ether, 3-hydroxypropyl vinyl ether, 2-hydroxypropyl vinyl ether, 2-hydroxy-2-methylpropyl vinyl ether, 4-hydroxybutyl vinyl ether, 4-hydroxy-2-methylbutyl vinyl ether, 5-hydroxypentyl vinyl ether, 6-hydroxyhexyl vinyl ether, 2-hydroxyethyl allyl ether, 4-hydroxybutyl allyl ether, ethylene glycol monoallyl ether, diethylene glycol monoallyl ether, triethylene glycol monoallyl ether and glycerin monoallyl ether. Among these, especially hydroxyalkyl vinyl ethers having 3-8 carbon atoms, particularly 4-hydroxybutyl vinyl ether and 2-hydroxyethyl vinyl ether are preferred from the viewpoint of easy polymerization.

It is preferable that the fluorine-containing copolymer (A-1) having hydroxyl group further comprises a non-fluorine-containing vinyl ether unit and/or non-fluorine-containing vinyl ester unit having no hydroxyl group, from the viewpoint of improving solubility in the acrylic monomer.

Examples of non-fluorine-containing vinyl ether unit and/or non-fluorine-containing vinyl ester unit having no hydroxyl group in the fluorine-containing copolymer (A-1) having hydroxyl group are alkyl vinyl ethers and alkyl allyl ethers represented by the formula (II): 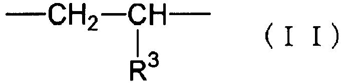 wherein R³ is -OR⁴, -COOR⁴ or -OCOR⁴ (R⁴ is alkyl). Examples of R⁴ are linear, branched or cyclic alkyl groups having 1-8 carbon atoms. Preferred examples thereof are cyclohexyl vinyl ether, methyl vinyl ether, ethyl vinyl ether, propyl vinyl ether, n-butyl vinyl ether, isobutyl vinyl ether, vinyl acetate, vinyl propionate, vinyl butyrate, vinyl isobutyrate, vinyl pivalate, vinyl caproate, vinyl versatate, vinyl laurate, vinyl stearate and vinyl cyclohexyl carboxylate. From the viewpoint of satisfactory weather resistance and solubility and low price, vinyl versatate, vinyl laurate, vinyl stearate, vinyl cyclohexyl carboxylate and vinyl acetate are preferred. Among these, from the viewpoint of chemical resistance, preferred are non-aromatic carboxylic acid vinyl esters, especially vinyl esters of carboxylic acid having 6 or more carbon atoms, further preferably vinyl esters of carboxylic acid having 9 or more carbon atoms. In carboxylic acid vinyl esters, an upper limit of the number of carbon atoms of carboxylic acid is preferably 20 or less, further preferably 15 or less. Specifically vinyl versatate is most preferred.

The fluorine-containing copolymer (A-1) having hydroxyl group may contain a carboxyl group-containing monomer unit.

The carboxyl group-containing monomer unit contains a carboxyl group and does not contain hydroxyl group and aromatic group and differs in this point from other units. When preparing a curable resin composition, the carboxyl group-containing monomer unit functions to improve dispersibility and curing reactivity of the fluorine-containing copolymer (A-1) having hydroxyl group and dispersibility of a pigment and improve gloss, hardness and adhesion to a substrate of the obtained coating film.

Examples of the carboxyl group-containing monomer unit are carboxyl group-containing vinyl monomers represented by the formula: 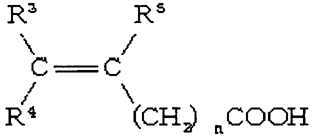 wherein R³, R⁴ and R⁵ are the same or different and each is hydrogen atom, an alkyl group, carboxyl group or ester group; n is 0 or 1, or the formula:

CH₂=CH CH₂ O-R⁶OCO R⁷COOH

wherein R⁶ and R⁷ are the same or different and each is a saturated or unsaturated linear or cyclic alkyl group; n is 0 or 1; m is 0 or 1.

Examples thereof are one or more of acrylic acid, methacrylic acid, vinylacetic acid, crotonic acid, cinnamic acid, 3-allyloxypropionic acid, itaconic acid, itaconic acid monoester, maleic acid, maleic acid monoester, maleic anhydride, fumaric acid, fumaric acid monoester, vinyl phthalate and vinyl pyromellitate, and among these, preferred are crotonic acid, itaconic acid, maleic acid, maleic acid monoester, fumaric acid, fumaric acid monoester and 3-allyloxypropionic acid which are low in homopolymerizability.

A lower limit of the proportion of the carboxyl group-containing monomer unit is 0.1 mol-%, preferably 0.4 mol-%, and an upper limit thereof is 2.0 mol-%, preferably 1.5 mol-%. The proportion exceeding 2.0 mol-% is not preferred from the viewpoint of a curing speed of a coating film.

Examples of the fluorine-containing copolymer (A-1) having hydroxyl group are 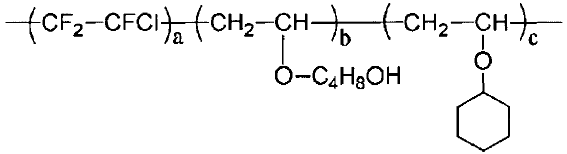 wherein a molar ratio of a, b and c is a:b:c=40 to 60:3 to 15:5 to 45; 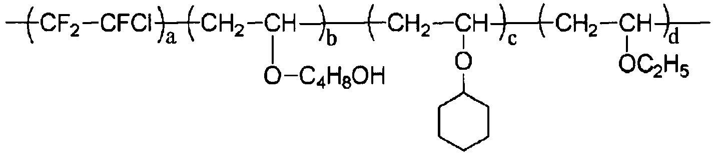 wherein a molar ratio of a, b, c and d is a:b:c:d=40 to 60:3 to 15:5 to 45:5 to 45; 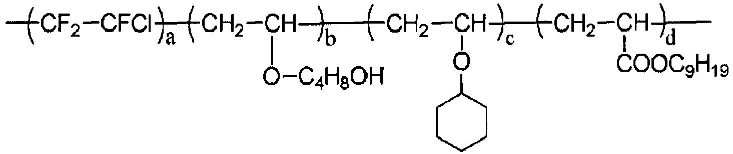 wherein a molar ratio of a, b, c and d is a:b:c:d=40 to 60:3 to 15:5 to 45:5 to 45; 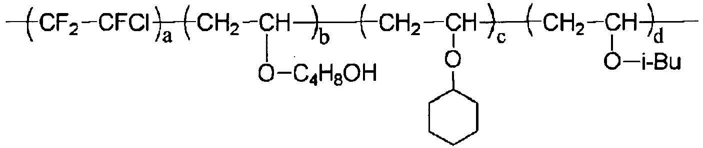 wherein a molar ratio of a, b, c and d is a:b:c:d=40 to 60:3 to 15:5 to 45:5 to 45, and i-Bu represents an isobutyl group; tetrafluoroethylene/vinyl versatate/hydroxybutyl vinyl ether; tetrafluoroethylene/vinyl versatate/hydroxyethyl vinyl ether/vinyl tert-butyl benzoate; tetrafluoroethylene/vinyl versatate/hydroxybutyl vinyl ether/crotonic acid; and tetrafluoroethylene/vinyl versatate/hydroxyethyl vinyl ether/vinyl benzoate/crotonic acid.

Examples of the radically polymerizable unsaturated group in the isocyanate group-containing unsaturated compound (A-2) are methacryl, acryl, 2-fluoroacryl and 2-chloroacryl, and from the viewpoint of polymerization reactivity, cost and easy synthesis, methacryl and acryl are preferred, and especially acryl is most preferred.

Examples of the isocyanate group-containing unsaturated compound (A-2) are alkyl vinyl ethers and alkyl allyl ethers represented by the formula (III): 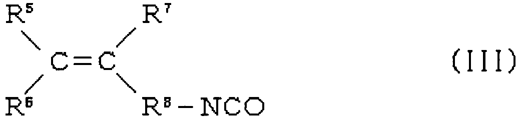 wherein R⁵, R⁶ and R⁷ are the same or different and each is H, F, Cl or C₁₋₄-alkyl, and R⁸ is -COO-R⁹-, -OCO-R⁹- or -O-R⁹- (R⁹ is C₁₋₂₀-alkyl.

Examples of the isocyanate group-containing unsaturated compound (A-2) are 2-isocyanateethyl acrylate (formula (IV)):

CH₂=CHCO-O-CH₂-CH₂-NCO (IV),

2-isocyanateethyl methacrylate (formula (V)): 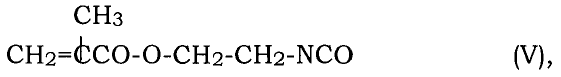 4-isocyanatebutyl acrylate and 4-isocyanatebutyl methacrylate.

Further, there are reaction products prepared by allowing polyisocyanate to react with unsaturated monoalcohol and having one isocyanate group. Examples of polyisocyanate are 2,4-tolylene diisocyanate, 2,6-tolylene diisocyanate, a mixture of isocyanates of 2,4-tolylene diisocyanate and 2,6-tolylene diisocyanate, P,P'-diphenylmethane diisocyanate, 1,5-naphthylene diisocyanate, p-phenylene diisocyanate, 1,6-hexamethylene diisocyanate, isophorone diisocyanate and hydrogenated xylylene diisocyanate. Examples of unsaturated monoalcohol are monoalcohols having acryloyl group or methacryloyl group such as 2-hydroxyethyl acrylate, 2-hydroxyethyl methacrylate, 2-hydroxypropyl acrylate, 2-hydroxypropyl methacrylate, 4-hydroxybutyl acrylate and 4-hydroxybutyl methacrylate, and monoalcohols having allyl group such as allyl alcohol, allyl cello solve and trimethylpropane diallyl ether. Among these, from the viewpoint of easy synthesis and high reactivity, 2-isocyanateethyl acrylate or 2-isocyanateethyl methacrylate is preferred.

The reaction product (A) is one obtained by urethane bonding of the hydroxyl group of the fluorine-containing copolymer (A-1) having hydroxyl group to the isocyanate group of the isocyanate group-containing unsaturated compound (A-2).

The fluorine content of the reaction product (A) is preferably not less than 2 % by mass, more preferably not less than 5 % by mass, further preferably not less than 10 % by mass, from the viewpoint of satisfactory weather resistance, water- and oil-repellency and stain-proofing property. Also, the fluorine content of the reaction product (A) is preferably not more than 50 % by mass, more preferably not more than 30 % by mass, further preferably not more than 25 % by mass, from the viewpoint of satisfactory solubility in acrylic monomer.

The number average molecular weight of the reaction product (A) is preferably not less than 1,000, more preferably not less than 2,000, further preferably not less than 3,000, from the viewpoint of strength and surface hardness of a cured article obtained by preparing a curable composition and curing it. Also, the number average molecular weight of the reaction product (A) is preferably not more than 100,000 from the viewpoint that handling of it is difficult since its viscosity is increased when more than 100,000, more preferably not more than 50,000 from the viewpoint of satisfactory solubility in acrylic monomer, further preferably not more than 30,000 from the viewpoint that viscosity of the composition is low and handling of it is easy.

The acrylic monomer (B) in the present invention is a monomer having one or more of acryloyl group, methacryloyl group, 2-fluoroacryloyl group or 2-chloroacryloyl group, and differs from the isocyanate group-containing unsaturated compound (A-2) having radically polymerizable unsaturated group.

The number of radically polymerizable unsaturated groups in the acrylic monomer (B) is preferably one from the viewpoint that solubility of the fluorine-containing copolymer (A-1) having hydroxyl group is high and viscosity is low, more preferably two or more from the viewpoint of satisfactory strength of a cured article obtained by preparing a curable composition and curing it, further preferably three or more from the viewpoint of satisfactory curing speed of the curable composition.

Examples of the acrylic monomer (B) are methacrylate monomers such as methyl methacrylate (MMA), methacrylic acid (MA), ethyl methacrylate (EMA), n-butyl methacrylate (nBMA), isobutyl methacrylate (iBMA), 2-ethylhexyl methacrylate, phenyl methacrylate, cyclohexyl methacrylate, 3-(trimethoxysilyl)propyl methacrylate (MSPM), 2-(phenylphosphoryl)ethyl methacrylate (phenyl-P), 2,2 -bis (4-methacryloxyphenyl) propane (BPDMA), 2,2 -bis (4-methacryloxyethoxyphenyl) propane (Bis-MEPP), 2,2-bis(4-methacryloxypolyethoxyphenyl)propane (Bis-MPEPP), di(methacryloxyethyl)trimethylhexamethylenediurethane (UDMA), trimethylolpropane trimethacrylate (TMPT), pentaerythritol triacrylate, pentaerythritol tetraacrylate, dipentaerythritol hexaacrylate, ethylene glycol dimethacrylate (EDMA or 1G), diethylene glycol dimethacrylate (DiEDMA), triethylene glycol dimethacrylate (TriEDMA), 1,4-butanediol dimethacrylate (1,4-BuDMA), 1,3-butanediol dimethacrylate (1,3-BuDMA) and 1,6-hexanediol diacrylate (16HX); and methacrylate monomers having hydroxyl group such as 2-hydroxyethyl methacrylate (HEMA), 2-hydroxy-3-(β-naphthoxy)propyl methacrylate (HNPM), N-phenyl-N-(2-hydroxy-3-methacryloxy)propyl glycine (NPG-GMA) and 2,2-bis[4-(2-hydroxy-3-methacryloxypropoxy)phenyl]propane (Bis-GMA). Also, there are acrylates and 2-chloroacrylates corresponding thereto.

Also, examples of fluorine-containing acrylic monomer are 2-fluoroacrylates corresponding to the above-mentioned methacrylate monomers and methacrylate monomers having hydroxyl group, CH₂=C(CH₃)COOCH₂CF₃ (3FMA), CH₂=C(CH₃)COOCH₂CF₂CF₂H (4FMA), CH₂=C(CH₃)COOCH₂CF₂CF₃ (5FMA), CH₂=C(CH₃)COOCH₂CF₂CFHCF₃ (6FMA), CH₂=C(CH₃)COOCH₂(CF₂)₃CF₂H (8FMA), CH₂=C(CH₃)COOCH₂CH₂(CF₂)₃CF₃ (9FMA), CH₂=C(CH₃)COOCH₂(CF₂)₅CF₂H (12FMA), CH₂=C(CH₃)COOCH₂CH₂(CF₂)₅CF₃ (13FMA), CH₂=C(CH₃)COOCH₂CH₂(CF₂)₇CF₃ (17FMA), CH₂=C(CH₃)COOCH(CF₃)₂ (HFIP-MA), CH₂=C(CH₃)COOCH₂CCH₃(CF₃)₂ (6FNP-MA), CH₂=C(CH₃)COOCH₂CF(CF₃)OCF₂CF₂CF₃ (6FOn1-MA), and acrylates, 2-fluoroacrylates and 2-chloroacrylates corresponding thereto.

Examples of the above-mentioned 2-fluoroacrylates are CH₂=CFCOOCH₂CF₂CF₂H (4FFA), CH₂=CFCOOCH₂CF₂CF₃ (5FFA), CH₂=CFCOOCH₂(CF₂)₃CF₂H (8FFA), CH₂=CFCOOCH₂(CF₂)₅CF₂H (12FFA) and CH₂=CFCOOCH(CF₃)₂ (HFIP-FA).

Also, the use of an acrylic monomer having curable functional group is preferred since a cured article being excellent in adhesion, chemical resistance and curability can be obtained. Examples of an acrylic monomer having curable functional group are acrylic monomers having hydroxyl group, carboxyl group, epoxy group or amino group. Examples thereof are acrylic monomers having curable functional group such as hydroxyethyl (meth)acrylate, 2-hydroxypropyl (meth)acrylate, 2-hydroxyethyl vinyl ether, (meth)acrylic acid, glycidyl (meth)acrylate, 2-aminoethyl (meth)acrylate and 2-aminopropyl (meth)acrylate though these overlap with the examples raised above.

In the acrylic monomers raised above, methyl methacrylate, ethyl methacrylate, methyl acrylate and ethyl acrylate are preferred from the viewpoint of satisfactory solubility of the fluorine-containing copolymer (A-1) having hydroxyl group, the isocyanate group-containing unsaturated compound (A-2) and the reaction product (A) thereof.

The mass ratio of the reaction product (A) to the acrylic monomer (B) is preferably 95:5 to 5:95, more preferably 80:20 to 20:80, further preferably 70:30 to 30:70. If the mass ratio of the reaction product (A) to the acrylic monomer (B) deviates from 95:5 and the mass of the reaction product (A) is increased more, there is a tendency that viscosity becomes higher and handling thereof is difficult. If the mass ratio of the reaction product (A) to the acrylic monomer (B) deviates from 5:95 and the mass of the reaction product (A) is decreased more, the fluorine content decreases, and therefore, there is a tendency that weather resistance, water- and oil-repellency and stain-proofing property of a cured article obtained by curing the curable composition are lowered.

With respect to the amounts of the reaction product (A) and the acrylic monomer (B), from a different standpoint, the amount of the acrylic monomer (B) is preferably not less than 10 parts by mass, more preferably not less than 40 parts by mass, further preferably not less than 60 parts by mass based on 100 parts by mass of the reaction product (A). If the amount of the acrylic monomer (B) is smaller, there is a tendency that viscosity becomes higher and handling thereof is difficult. Also, the amount of the acrylic monomer (B) is preferably not more than 1,500 parts by mass, more preferably not more than 1,200 parts by mass, further preferably not more than 1,000 parts by mass based on 100 parts by mass of the reaction product (A). If the amount of the acrylic monomer (B) is increased more, there is a tendency that weather resistance, water- and oil-repellency and stain-proofing property of a cured article obtained by curing the curable composition are lowered due to decrease in fluorine content.

Viscosity at 25°C of the curable resin composition is not less than 5 mPa·s because in the case of too low viscosity, a lot of sagging occurs and handling of the composition becomes difficult, preferably not less than 10 mPa·s from the viewpoint of satisfactory property of forming a thin film, further preferably not less than 50 mPa·s since shrinkage due to curing is small. Also, viscosity at 25°C of the curable resin composition is not more than 100,000 mPa·s because handling property of it is satisfactory, preferably not more than 5,000 mPa·s since the curable composition is spread to every portion on a mold surface at mold-processing, further preferably not more than 3,000 mPa·s since leveling property (surface smoothness) is satisfactory when a thin film is formed.

The curable resin composition of the present invention may further comprise a curing agent. The curing agent is a compound undergoing crosslinking by reaction with curable reaction group of the fluorine-containing copolymer (A-1) having hydroxyl group, and for example, isocyanates having no unsaturated bond, amino resins, acid anhydrides, polyepoxy compounds and isocyanate group-containing silane compounds are usually used.

Examples of isocyanates having no unsaturated bond are 2,4-tolylene diisocyanate, diphenylmethane-4,4'-diisocyanate, xylylene diisocyanate, isophorone diisocyanate, lysine methyl ester diisocyanate, methylcyclohexyl diisocyanate, trimethylhexamethylene diisocyanate, hexamethylene diisocyanate, n-pentane-1,4-diisocyanate, trimers thereof, adducts and biurets thereof, polymers thereof having two or more isocyanate groups and blocked isocyanates. The isocyanate compound and blocked isocyanate compound are not limited to them.

Non-limiting examples of the amino resin are, for instance, urea resin, melamine resin, benzoguanamine resin, glycoluril resin, methylolated melamine resin obtained by methylolating melamine, alkyl-etherified melamine resin obtained by etherification of methylolated melamine with alcohol such as methanol, ethanol or butanol.

Non-limiting examples of the acid anhydride are, for instance, phthalic anhydride, pyromellitic anhydride and mellitic anhydride.

With respect to the polyepoxy compound and isocyanate group-containing silane compound, those disclosed, for example, in JP2-232250A and JP2-232251A can be used. Suitable examples are: 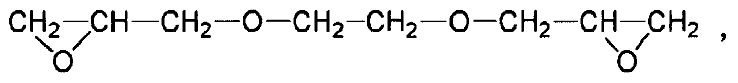 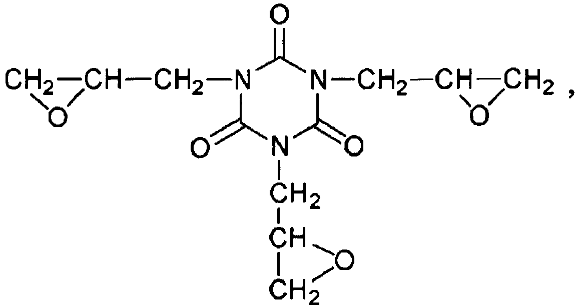 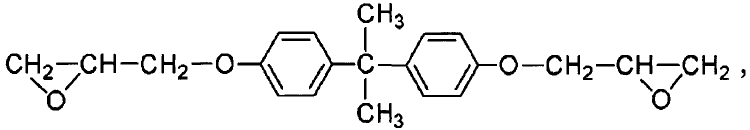 OCNC₃H₆Si(OC₂H₅)₃ and OCNC₂H₄Si(OCH₃)₃.

The amount of curing agent is 0.1-5 equivalent, preferably 0.5-1.5 equivalent based on one equivalent of chemically reactive curable group in the fluorine-containing copolymer (A-1) having hydroxyl group. The composition of the present invention can be cured usually at a temperature of 0-200°C for several minutes to about 10 days.

Also, when the curable resin composition of the present invention is cured, since UV is irradiated during the polymerization of the reaction product (A) and the acrylic monomer (B), a photo-polymerization initiator may be contained in the curable resin composition. Examples of the photo-polymerization initiator are acetophenone compounds such as acetophenone, chloroacetophenone, diethoxyacetophenone, hydroxyacetophenone and α-aminoacetophenone; benzoin compounds such as benzoin, benzoin methyl ether, benzoin ethyl ether, benzoin isopropyl ether, benzoin isobutyl ether and benzyl dimethyl ketal; benzophenone compounds such as benzophenone, benzoylbenzoic acid, methylo-benzoylbenzoate, 4-phenylbenzophenone, hydroxybenzophenone, hydroxy-propylbenzophenone, acrylated benzophenone and Michler's ketone; thioxanthones such as thioxanthone, chlorothioxanthone, methylthioxanthone, diethylthioxanthone and dimethylthioxanthone; and other compounds such as benzyl, α-acyloxime ester, acylphosphine oxide, glyoxyester, 3-ketocoumaran, 2-ethylanthraquinone, camphorquinone and anthraquinone.

Also, as case demands, any of known auxiliaries for photo-initiation such as amines, sulfones and sulfines may be added.

The curable resin composition of the present invention does not contain an organic solvent having no radically reactive group, and preferably it contains no fluorine-containing solvent, from the viewpoint that no step for removing a solvent is necessary after the curing of the curable resin composition and there is no adverse effect due to a remaining solvent such as lowering of heat resistance, lowering of strength and occurrence of white turbidity. Examples of an organic solvent having no radically reactive group are aliphatic hydrocarbons such as hexane, cyclohexane, heptane, octane, nonane, decane, undecane, dodecane and mineral spirit; aromatic hydrocarbons such as benzene, toluene, xylene, naphthalene and solvent naphtha; esters such as methyl acetate, ethyl acetate, propyl acetate, n-butyl acetate, isobutyl acetate, isopropyl acetate, isobutyl acetate, cellosolve acetate, propylene glycol methyl ether acetate, carbitol acetate, diethyl oxalate, ethyl pyruvate, ethyl-2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate and ethyl 2-hydroxyisobutyrate; ketones such as acetone, methyl ethyl ketone, cyclohexanone, methyl isobutyl ketone, 2-hexanone, cyclohexanone, methyl amino ketone and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol and tert-amyl alcohol; cyclic ethers such as tetrahydrofuran, tetrahydropyran and dioxane; amides such as N,N-dimethylformamide and N,N-dimethylacetamide; ether alcohols such as methyl cellosolve, cellosolve, isopropyl cellosolve, butyl cellosolve and diethylene glycol monomethyl ether; 1,1,2-trichloro-1,2,2-trifluoroethane, 1,2-dichloro-1,1,2,2-tetrafluoroethane and dimethyl sulfoxide. Also, there are solvent mixtures of two or more thereof.

Examples of the fluorine-containing solvent are, for instance, CH₃CCl₂F (HCFC-141b), a mixture of CF₃CF₂CHCl₂ and CClF₂CF₂CHClF (HCFC-225), perfluorohexane, perfluoro(2-butyltetrahydrofuran), methoxy-nonafluorobutane, 1,3-bistrifluoromethylbenzene, and in addition, fluorine-containing alcohols such as H(CF₂CF₂)ₙCH₂OH (n isan integer of 1-3), F(CF₂)ₙCH₂OH (n is an integer of 1-5) and CF₃CH(CF₃)OH; benzotrifluoride, perfluorobenzene, perfluoro(tributylamine) and ClCF₂CFClCF₂CFCl₂.

Those fluorine-containing solvents may be used solely, in a mixture thereof or in a mixture of one or more of the fluorine-containing solvents and non-fluorine-containing solvents.

Further, the curable resin composition of the present invention can be formed into a so-called solvent-free type curable resin composition by using neither an organic liquid (organic solvent) other than the acrylic monomer (B) nor water. By forming into such a solvent-free type, removal of an organic solvent is not necessary, a molding step can be simplified, and a problem that in the case of insufficient removal of an organic solvent, it remains in a cured article does not arise. Also problems such as lowering of heat resistance and mechanical strength and occurrence of white turbidity due to an effect of the remaining organic solvent do not arise. Further, a solvent-free type curable resin composition is useful for the case where a volatile component is not allowed in view of mold-processing conditions. For example, there are applications such as filling inside the closed vessel and sealing thereof.

Also, the present invention relates to the process for preparing the curable resin composition comprising a step for dissolving, in the acrylic monomer (B), the fluorine-containing copolymer (A-1) having hydroxyl group and the isocyanate group-containing unsaturated compound (A-2) having one isocyanate group and at least one radically polymerizable unsaturated group, and a step for allowing the fluorine-containing copolymer (A-1) having hydroxyl group to react with the isocyanate group-containing unsaturated compound (A-2) in the acrylic monomer (B).

The fluorine-containing copolymer (A-1) having hydroxyl group is prepared by copolymerizing a monomer mixture comprising a fluoroolefin and a radically polymerizable hydroxyl group-containing unsaturated monomer.

With respect to a fluoroolefin and a radically polymerizable hydroxyl group-containing unsaturated monomer, the above-mentioned fluoroolefin unit and radically polymerizable hydroxyl group-containing unsaturated monomer unit can be used.

The process for preparing the fluorine-containing copolymer (A-1) having hydroxyl group is not limited particularly, and known polymerization conditions can be employed. Since the fluorine-containing copolymer (A-1) having hydroxyl group dissolves in the acrylic monomer (B), a form (for example, particle size) of the polymerization product does not come into question.

The mass ratio of the acrylic monomer (B) to the fluorine-containing copolymer (A-1) having hydroxyl group is not limited particularly as far as the fluorine-containing copolymer (A-1) having hydroxyl group dissolves uniformly in the acrylic monomer (B). Unless the fluorine-containing copolymer (A-1) having hydroxyl group dissolves uniformly, reaction thereof with the isocyanate group-containing unsaturated compound (A-2) having one isocyanate group and at least one radically polymerizable unsaturated group becomes difficult or does not proceed uniformly, and as a result, physical properties of a cured article such as heat resistance and transparency are lowered.

When dissolving the fluorine-containing copolymer (A-1) having hydroxyl group and the isocyanate group-containing unsaturated compound (A-2) in the acrylic monomer (B) no organic solvent having no radically reactive group is used. Examples of an organic solvent having no radically reactive group are organic solvents explained supra.

The reaction of the fluorine-containing copolymer (A-1) having hydroxyl group with the isocyanate group-containing unsaturated compound (A-2) means that the hydroxyl group of the fluorine-containing copolymer (A-1) having hydroxyl group is allowed to react with the isocyanate group of the isocyanate group-containing unsaturated compound (A-2) to form urethane bond.

It is preferable that the reaction of the fluorine-containing copolymer (A-1) having hydroxyl group with the isocyanate group-containing unsaturated compound (A-2) is carried out under the condition of the acrylic monomer (B) undergoing no reaction in the absence of an organic solvent having no radically reactive group.

In the reaction of the fluorine-containing copolymer (A-1) having hydroxyl group with the isocyanate group-containing unsaturated compound (A-2), the reaction temperature is preferably not less than 5°C from the viewpoint of satisfactory reactivity, and is more preferably not less than 10°C, further preferably not less than 20°C, from the viewpoint that viscosity of a system decreases, and as a result, a reaction speed is accelerated. Also, a higher reaction temperature is preferable from the viewpoint that as far as the acrylic monomer (B) dissolving the copolymer undergoes no reaction substantially and thermal stability of additives is maintained, viscosity of the composition is decreased and a reaction speed is fast, thereby making it unnecessary to add a curing accelerator. However, the temperature is preferably not more than 80°C practically in consideration of thermal stability of the acrylic monomer, preferably not more than 60°C in the case of using 2-fluoroacryl monomer or the like having high polymerization reactivity, further preferably not more than 50°C in consideration of storage stability.

A ratio of the number of isocyanate groups in the isocyanate group-containing unsaturated compound (A-2) to the number of hydroxyl groups in the fluorine-containing copolymer (A-1) having hydroxyl group is preferably 0.01:1 to 1:1, where the number of isocyanate groups is smaller than the number of hydroxyl groups, more preferably 0.1:1 to 1:1 from the viewpoint of satisfactory reactivity with the acrylic monomer at curing, further preferably 0.2:1 to 0.8:1 from the viewpoint that solubility in acrylic monomer is good when the hydroxyl group of the fluorine-containing copolymer (A-1) having hydroxyl group remains as a residue. When the ratio of the number of isocyanate groups in the isocyanate group-containing unsaturated compound (A-2) to the number of hydroxyl groups in the fluorine-containing copolymer (A-1) having hydroxyl group is beyond 0.01:1 and the number of isocyanate groups is smaller, reaction with the acrylic monomer becomes insufficient and as a result, there is a tendency that a cured article becomes turbid in white or mechanical strength of a cured article is decreased. When the ratio of the number of isocyanate groups to the number of hydroxyl groups is beyond 1:1 and the number of isocyanate groups is larger, excessive isocyanates remain as residual in the composition, and characteristics of a cured article tends to be lowered.

To the curable resin composition of the present invention may be optionally added, for example, a curing accelerator, a pigment, a dispersant, a thickener, a preserving agent, an ultraviolet absorber, a defoaming agent and a leveling agent in addition to those mentioned above.

Examples of a curing accelerator are organotin compound, acidic phosphoric acid ester, a reaction product of acidic phosphoric acid ester and amine, saturated or unsaturated polycarboxylic acid or acid anhydride thereof, organotitanium compound, amine compound and lead octylate.

Examples of the above-mentioned organotin compound are dibutyltindilaurate, dibutyltinmaleate, dioctyltinmaleate, dibutyltindiacetate, dibutyltinphthalate, tin octylate, tin naphthenate and dibutyltinmethoxide.

Acidic phosphoric acid ester means phosphoric acid ester having a moiety of: 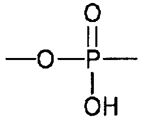 and examples thereof are organic acidic phosphoric acid esters represented by: 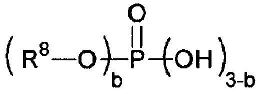 wherein b is 1 or 2, and R⁸ represents an organic residue. Examples thereof are

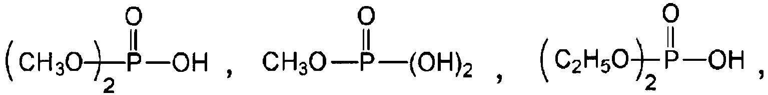

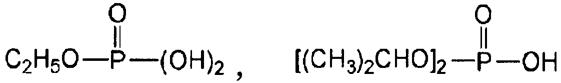

Examples of the above-mentioned organotitanium compound are titanic acid esters such as tetrabutyltitanate, tetraisopropyltitanate and triethanolamine titanate.

Further, examples of the above-mentioned amine compound are amine compounds such as butylamine, octylamine, dibutylamine, monoethanolamine, diethanolamine, triethanolamine, diethylenetriamine, triethylenetetramine, oleylamine, cyclohexylamine, benzylamine, diethylaminopropylamine, xylylenediamine, triethylenediamine, guanidine, diphenylguanidine, 2,4,6-tris(dimethylaminomethyl)phenol, morpholine, N-methylmorpholine and 1,8-diazabicyclo(5.4.0)undecene-7 (DBU), their salts of carboxylic acids, low molecular weight polyamide resin obtained from excessive polyamine and polybasic acid, and a reaction product of excessive polyamine and epoxy compound.

With respect to the curing accelerator, one kind may be used and two or more kinds may be used together. The amount of curing agent is preferably 1.0 × 10⁻⁶ to 1.0 × 10⁻² part by mass, more preferably 5.0 × 10⁻⁵ to 1.0 × 10⁻³ part by mass based on 100 parts by mass of the copolymer.

The curable resin composition of the present invention can be used in various forms for various applications.

For example, the composition is formed into a cured film and can be used for various applications. For forming a film, proper known methods can be employed depending on applications. For example, when control of a film thickness is necessary, a roll coating method, a gravure coating method, a micro gravure coating method, a flow coating method, a bar coating method, a spray coating method, a die coating method, a spin coating method and a dip coating method can be employed.

While the curable resin composition of the present invention may be formed into a film, it is especially useful as a molding material for various molded articles. With respect to the molding method, extrusion molding, injection molding, compression molding, blow molding, transfer molding, photo fabrication, nanoimprint and vacuum molding can be employed.

Examples of applications of the curable resin composition of the present invention are sealing members, optical materials, photoelectric camera tube, various sensors and anti-reflection material.

Examples of embodiments of the sealing member are, for instance, packaging (sealing) and surface mount of optical functional devices such as light emitting elements, for example, light emitting diode (LED), electroluminescence element and non-linear optical element, and photodetectors such as CCD, CMOS and PD. Also there are sealing materials (or filling materials) for optical members such as lens for deep ultraviolet microscope. Sealed optical devices are used for various applications. Nonlimiting examples thereof are light emitting elements for high-mount-stop-lamp, meter panel, back light of mobile phone and light source of remote controller of various electric appliances; photodetectors for automatic focus of camera and optical pick-up of CD/DVD.

The resin composition is used as an optical material having a low refractive index since it contains fluorine. For example, it is useful as a medium for optical transmission. It is usable especially for optical materials such as clad material of plastic clad optical fiber having a core of quartz or optical glass, clad material of all-plastic optical fiber having a plastic core, anti-reflection coating material, lens material, optical waveguide material, prism material, optical window material, optical memory disc material, non-linear optical element, hologram material, photorefractive material, and sealing material of light emitting element. Also, the composition can be used as materials for optical devices. Examples of known optical devices are functional elements such as optical waveguide, OADM, optical switch, optical filter, optical connector and optical branching filter and optical packaging such as optical wiring, and the composition is a material useful for forming these devices. Further, the composition is suitably used for functional elements for optical devices such as modulator, wavelength conversion element and optical amplifier by incorporating various functional compounds (such as non-linear optical material, fluorescence generating functional pigment and photorefractive material) to the composition.

In the case of sensor applications, especially optical sensor and pressure sensor, the composition is useful since there are effects of improving sensitivity and protecting a sensor by its water- and oil-repellency.

Examples of other applications of the composition are materials for sealing member for electronic semiconductor, water- and moisture-resistant adhesives and adhesives for optical parts and elements.

There are exemplified applications as mentioned above, but the application is not limited thereto.

### EXAMPLE

The present invention is then explained by means of examples, but is not limited to them.

Measuring methods employed herein are collectively explained as follows.

### (1) Measurement of number average molecular weight

The number average molecular weight is calculated from the data obtained by measuring by gel permeation chromatography (GPC) by using GPC HLC-8020 available from Toso Kabushiki Kaisha and columns available from Shodex (one GPC KF-801, one GPC KF-802 and two GPC KF-806M connected in series) and flowing tetrahydrofuran (THF) as a solvent at a flowing rate of 1 ml/min.

### (2) Measurement of hydroxyl value

A hydroxyl value is obtained by an acetylation method using acetic anhydride.

### (3) Fluorine content

The fluorine content (% by mass) is obtained by burning 10 mg of a sample by an oxygen flask combustion method, absorbing cracked gas in 20 ml of de-ionized water and then measuring a fluorine ion concentration in the fluorine ion-containing solution through fluoride-ion selective electrode method (using a fluorine ion meter model 901 available from Orion).

### (4) Viscosity

Viscosity (mPa·s) of a composition at 25°C is measured with an oscillation type viscometer SV-10 of Kabushiki Kaisha A & D.

### (5) Measurement of density before curing

A density at 25°C is measured with a picnometer by usual method.

### (6) Measurement of density of cured article

A mass (W1) in water at 25°C and a mass (W2) in the air at 25°C are measured, and a volume is calculated from a difference thereof and a density (d25) is calculated. d25=W2/((W2-W1)/Density of water)

### (7) Refractive index (n_{D})

A refractive index is measured at 25°C with Abbe's refractometer available from Kabushiki Kaisha Atago Kogaku Kiki Seisakusho using sodium D line (589nm) as light source.

### (8) Thermal decomposition temperature (Td)

A thermal decomposition temperature giving 1 % by mass of weight reduction is measured at a temperature elevating rate of 10°C/min using a thermogravimeter (TGA-50 available from Shimadzu Corporation).

### (9) Light transmission

A value measured using a spectral transmittance curve of about 100 µm thick sample (cured film) at a wavelength of 300 to 800 nm with a recording spectrophotometer (U-3310 (trade name) available from Hitachi, Ltd.) is used.

### (10) Measurement of dynamic viscoelasticity

A dynamic viscoelasticity is measured with a dynamic viscoelasticity meter RSA-2 available from Rheometrics Inc. A sample is one molded into 25 mm long × 5 mm wide × 100 µm thick, and its tanδ and elasticity (E) are measured. Measuring conditions are set to 0.1 % of distortion, 10 Hz of frequency and 5°C/min of temperature elevating rate.

### (11) Measurement of glass transition temperature Tg (DMA)

A peak temperature of tanδ measured for dynamic elasticity is assumed to be a glass transition temperature Tg (DMA) (°C).

### (12) Cross-cut test

A cross-cut test is conducted according to JIS K 5400 6.15.

### (13) Measurement of solvent resistance

A sample of 10 mm × 10 mm × 0.1 mm is dipped in 20 ml of butyl acetate, and is observed with naked eyes after allowing to stand at room temperature for eight hours.

### (14) Evaluation of heat resistance

Each sample is held at 150°C for one hour and then a change of its appearance is observed.

### SYNTHESIS EXAMPLE 1

### (Preparation of fluorine-containing polymer having hydroxyl group)

Polymers (a) to (d) of fluorine-containing copolymer (A-1) having hydroxyl group as indicated below were synthesized according to the process described in JP2004-204205A.
Polymer (a): TFE/W9/HBVE = 45/39/16, number average molecular weight (Mn) = 1.2 × 10³, Tg = 35°C, fluorine content (mass %) = 24, hydroxyl value (mgKOH/g) = 54
Polymer (b): TFE/W10/HEVE/VtBz = 45/35/15/5, Mn = 1.3 × 10³, Tg = 12°C, fluorine content (mass %) = 24, hydroxyl value (mgKOH/g) = 68
Polymer (c): TFE/W9/HBVE/CA = 45/39.3/15/0.7, Mn = 1.1 × 10³, Tg = 33°C, fluorine content (mass %) = 24, hydroxyl value (mgKOH/g) = 51
Polymer (d): TFE/W9/HEVE/VBz/CA = 45/34.4/14/6/0.6, Mn = 1.2 × 10³, Tg = 30°C, fluorine content (mass %) = 25, hydroxyl value (mgKOH/g) = 66
Polymer (e): CTFE/VV10/HEVE = 49/37/14, Mn = 1.2 × 10³, Tg = 19°C, fluorine content (mass %) = 28, hydroxyl value (mgKOH/g) = 57
Polymer (f): HFP/VV10/HEVE = 48/37/15, Mn = 1.2 × 10³, Tg = 21°C, fluorine content (mass %) = 33, hydroxyl value (mgKOH/g) = 58
   TFE: Tetrafluoroethylene
   CTFE: Chlorotrifluoroethylene
   HFP: Hexafluoropropylene
   W9: Vinyl versatate (VeoVa9 (trade name of aliphatic carboxylic acid vinyl ester having 9 carbon atoms and being available from Shell Chemical Co., Ltd.))
   VV10: Vinyl versatate (VeoVa10 (trade name of aliphatic carboxylic acid vinyl ester having 10 carbon atoms and being available from Shell Chemical Co., Ltd.))
   HBVE: Hydroxybutyl vinyl ether
   HEVE: Hydroxyethyl vinyl ether
   VtBz: Vinyl tert-butyl benzoate
   VBz: Vinyl benzoate
   CA: Crotonic acid

### EXAMPLE 1

A composition (a1) was prepared according to the following formulation.

**Composition (a1)**

| | |
|---|---|
| Polymer (a) | 50 parts by mass |
| Methyl methacrylate (MMA) | 30 parts by mass |
| Hydroxyethyl methacrylate (HEMA) | 10 parts by mass |
| 1,6-Hexanediol diacrylate (16HX) | 10 parts by mass |
| 2-Hydroxy-2-methylpropiophenone | 1 part by mass |

Then, 7.1 parts by mass (corresponding to 0.4 equivalent based on all hydroxyl groups in the composition) of Karenz AOI (hereinafter referred to as AOI) available from SHOWA DENKO K.K. was added as the isocyanate group-containing unsaturated compound (A-2) to 100 parts by mass of the composition (a1), followed by 24-hour reaction at 40°C. The structural formula of AOI is represented by the formula (VI).

H₂C=CHCOOCH₂CH₂NCO (VI)

According to measurement by infrared-absorbing analysis of the reaction product, it was confirmed that absorption of -NCO derived from the isocyanate group of AOI had disappeared and absorption of NH resulting from urethane bond was observed, which indicated that the reaction had proceeded (Measurement was carried out at room temperature with a Fourier-transform infrared spectrophotometer 1760X available from Perkin Elmer Co., Ltd.).

Appearance of the liquid composition at 25°C before curing was evaluated with naked eyes. Criteria for the evaluation are as follows.
O: Composition is transparent and uniform, and transmission of 550 nm light is not less than 80 %.
Δ: White turbidity (gel) is partly found.
×: Composition is opaque and turbid in white.

The results of evaluation of viscosity, density, refractive index and appearance of the liquid composition at 25°C before curing are shown in Table 1.

Then, a fluorine-containing resin film NF-0100 (thickness 100 µm) for releasing of a coating film available from DAIKIN INDUSTRIES, LTD. was spread on a glass plate and the composition was coated thereon with an applicator to give a thickness of about 100 µm. Further, the coating was covered with a fluorine-containing resin film NF-0100 (thickness 100 µm) for releasing of the coating film available from DAIKIN INDUSTRIES, LTD. and a 1 mm thick slide glass was placed thereon. Then, after irradiation of ultraviolet ray at an intensity of 1,500 mJ/cm²U by using a high pressure mercury lamp, fluorine-containing resin films for releasing were removed to give a cured film.

Density, fluorine content, refractive index (n), thermal decomposition temperature (Td), glass transition temperature (Tg(DMA)), dynamic viscoelasticity (E) and visible light transmission (550 nm) (T) of the sample film (after curing) were measured.

Also, appearance was evaluated with naked eyes. Criteria for the evaluation are shown below.
O: Film is transparent and uniform.
Δ: White turbidity is partly found.
×: Film is opaque and turbid in white.

Also, solvent resistance was evaluated. Criteria for the evaluation are shown below.
O: No swelling is found with naked eyes.
Δ: Swelling is found with naked eyes.
×: Dissolved.

Further, heat resistance was evaluated. Criteria for the evaluation are shown below.
O: No change is found with naked eyes.
Δ: Change in color and turbidity are slightly found with naked eyes.
×: Change in color, turbidity and deformation are apparently found with naked eyes.

The results of the above-mentioned evaluation are shown in Table 2.

### EXAMPLE 2

Physical properties were measured in the same manner as in Example 1 by conducting reaction at 40°C for 24 hours except that 14 parts by mass (corresponding to 0.8 equivalent based on all hydroxyl groups in the composition) was added to 100 parts by mass of the composition (a1). The results are shown in Tables 1 and 2.

### COMPARATIVE EXAMPLE 1

Physical properties were measured in the same manner as in Example 1 except that the composition (a1) was used as it was. The results are shown in Tables 1 and 2.

### EXAMPLE 3

Physical properties were measured in the same manner as in Example 1 except that a composition (b1) shown below was used instead of the composition (a1) and AOI was added in an amount of 6.9 parts by mass (corresponding to 0.8 equivalent based on all hydroxyl groups in the composition) to 100 parts by mass of the composition (b1). The results are shown in Tables 1 and 2.

**Composition (b1)**

| | |
|---|---|
| Polymer (b) | 50 parts by mass |
| MMA | 40 parts by mass |
| 16HX | 10 parts by mass |
| 2-Hydroxy-2-methylpropiophenone | 1 part by mass |

### COMPARATIVE EXAMPLE 2

Physical properties were measured in the same manner as in Example 1 except that the composition (b1) was used as it was instead of the composition (a1). The results are shown in Tables 1 and 2.

### EXAMPLE 4

Physical properties were measured in the same manner as in Example 1 except that a composition (a2) shown below was used instead of the composition (a1) and AOI was added in an amount of 14 parts by mass (corresponding to 0.8 equivalent based on all hydroxyl groups in the composition) to 100 parts by mass of the composition (a2). The results are shown in Tables 1 and 2.

**Composition (a2)**

| | |
|---|---|
| Polymer (a) | 50 parts by mass |
| MMA | 30 parts by mass |
| HEMA | 10 parts by mass |
| Trimethylolpropane triacrylate (TMPA) | 10 parts by mass |
| 2-Hydroxy-2-methylpropiophenone | 1 part by mass |

### COMPARATIVE EXAMPLE 3

Physical properties were measured in the same manner as in Example 1 except that the composition (a2) was used as it was instead of the composition (a1). The results are shown in Tables 1 and 2.

### EXAMPLE 5

Physical properties were measured in the same manner as in Example 1 except that a composition (b2) shown below was used instead of the composition (a1) and AOI was added in an amount of 6.9 parts by mass (corresponding to 0.8 equivalent based on all hydroxyl groups in the composition) to 100 parts by mass of the composition (b2). The results are shown in Tables 1 and 2.

**Composition (b2)**

| | |
|---|---|
| Polymer (b) | 50 parts by mass |
| MMA | 40 parts by mass |
| TMPA | 10 parts by mass |
| 2-Hydroxy-2-methylpropiophenone | 1 part by mass |

### COMPARATIVE EXAMPLE 4

Physical properties were measured in the same manner as in Example 1 except that the composition (b2) was used as it was instead of the composition (a1). The results are shown in Tables 1 and 2.

**TABLE 1**

| | | | Properties of composition before curing | | | |
|---|---|---|---|---|---|---|
| Ex. Number | Composition | Amount of (A-2) (equivalent) | Viscosity (mPa·s) | Density (g/cm³) | Refractive index | Appearance |
| Ex. 1 | a1 | 0.4 | 361 | 1.106 | 1.443 | ○ |
| Ex. 2 | a1 | 0.8 | 382 | 1.108 | 1.447 | ○ |
| Ex. 3 | b1 | 0.8 | 303 | 1.106 | 1.437 | ○ |
| Ex. 4 | a2 | 0.8 | 311 | 1.009 | 1.441 | ○ |
| Ex. 5 | b2 | 0.8 | 340 | 1.103 | 1.440 | ○ |
| Com. Ex. 1 | a1 | - | 291 | 1.104 | 1.438 | × |
| Com. Ex. 2 | b1 | - | 222 | 1.105 | 1.435 | × |
| Com. Ex. 3 | a2 | - | 243 | 1.007 | 1.442 | × |
| Com. Ex. 4 | b2 | - | 280 | 1.008 | 1.437 | × |

**TABLE 2**

| | | | After curing | | | | |
|---|---|---|---|---|---|---|---|
| Ex. Number | Composition | Amount of (A-2) (equivalent) | Density (g/cm³) | Fluorine content (mass %) | Refractive index | Thermal decomposition temperature (°C) | Tg (DMA) (°C) |
| Ex. 1 | a1 | 0.4 | 1.251 | 12 | 1.473 | 235 | 58.4 |
| Ex. 2 | a1 | 0.8 | 1.261 | 11 | 1.478 | 251 | 66.4 |
| Ex. 3 | b1 | 0.8 | 1.231 | 11 | 1.474 | 262 | - |
| Ex. 4 | a2 | 0.8 | 1.258 | 11 | 1.475 | 255 | - |
| Ex. 5 | b1 | 0.8 | 1.245 | 12 | 1.467 | 262 | - |
| Com. Ex. 1 | a1 | - | 1.236 | 12 | - | 197 | 108.3 |
| Com. Ex. 2 | b1 | - | 1.224 | 12 | - | 198 | - |
| Com. Ex. 3 | a2 | - | 1.208 | 12 | - | 297 | - |
| Com. Ex. 4 | b2 | - | 1.231 | 12 | - | 245 | - |

| | After curing | | | | | | |
|---|---|---|---|---|---|---|---|
| Ex. Number | E (×10³) | Appearance | Light transmission (%) | Solvent resistance | Heat resistance | | |
| Ex. 1 | 104 | ○ | 74 | ○ | ○ | | |
| Ex. 2 | 208 | ○ | 72 | ○ | ○ | | |
| Ex. 3 | - | ○ | 90 | ○ | ○ | | |
| Ex. 4 | - | ○ | 74 | ○ | ○ | | |
| Ex. 5 | - | ○ | 73 | ○ | ○ | | |
| Com. Ex. 1 | 7 | × | 1 | Δ | × | | |
| Com. Ex. 2 | - | × | 2 | Δ | × | | |
| Com. Ex. 3 | - | × | 7 | Δ | × | | |
| Com. Ex. 4 | - | × | 12 | Δ | × | | |

### EXAMPLE 6

### (Weather resistance test)

The composition of Example 2 was coated on an aluminum sheet (JIS H 4000A-1050P AM-712) (0.1 mm thick) by spray coating, and was cured by irradiation with ultraviolet ray at 2,000 mJ/cm² by a conveyor type UV exposing machine, followed by 3-hour post-baking at 180°C to prepare a coated sheet having a coating film thickness of about 100 µm. Then, an accelerated weather resistance test was carried out for 500 hours with EYE SUPER UV TESTER Model W-13 (one cycle comprising Light/Dew/Rest=11/11/1 hr) available from IWASAKI ELECTRIC CO., LTD., and appearance was observed with naked eyes. Evaluation was carried out by the following criteria.
A: There is no abnormality.
B: Discoloration is somewhat found.
C: Significant discoloration is found.

The results of evaluation are shown in Table 3.

### EXAMPLE 7

### (Cross-cut test)

Adhesion of the coating film of Example 6 was evaluated by a cross-cut test. The results of evaluation are shown in Table 3.

### COMPARATIVE EXAMPLE 5

Weather resistance test was carried out in the same manner as in Example 6 using a composition comprising 50 parts by mass of a polymer of CH₂=C(CH₃)COOCH(CF₃)₂ (HFIP-MA) (number average molecular weight: 12,000), 20 parts by mass of CH₂=C(CH₃)COOCH₂CCH₃(CF₃)₂ (6FNP-MA), 20 parts by mass of CH₂=C(CH₃)COOCH₂CF(CF₃)OCF₂CF₂CF₃ (6FOn1-MA), 10 parts by mass of TMPA and 1 part by mass of 2-hydroxy-2-methylpropiophenone. The results are shown in Table 3.

**TABLE 3**

| Ex. number | Composition | Amount of (A-2) (equivalent) | Weather resistance |
|---|---|---|---|
| Ex. 6 | a1 | 0.8 | A |
| Com. Ex. 5 | | - | B |

| | | | Results of cross-cut test |
|---|---|---|---|
| Ex. 7 | a1 | 0.8 | 100/100 |

### EXAMPLE 8

A composition (c1) was prepared according to the following formulation.

**Composition (c1)**

| | |
|---|---|
| Polymer (c) | 50 parts by mass |
| MMA | 40 parts by mass |
| TMPA | 10 parts by mass |
| 2-Hydroxy-2-methylpropiophenone | 1 part by mass |

Then, 4.3 parts by mass (corresponding to 0.6 equivalent based on all hydroxyl groups in the composition) of Karenz MOI (hereinafter referred to as MOI) was added as the isocyanate group-containing unsaturated compound (A-2) to 100 parts by mass of the composition (c1), followed by 24-hour reaction at 40°C. The structural formula of MOI is represented by the formula (VII).

H₂C=C(CH₃)COOCH₂CH₂NCO (VII)

According to measurement by infrared-absorbing analysis of the reaction product, it was confirmed that absorption of -NCO derived from the isocyanate group of MOI had disappeared and absorption of NH resulting from urethane bond was observed, which indicated that the reaction had proceeded (Measurement was carried out at room temperature with a Fourier-transform infrared spectrophotometer 1760X available from Perkin Elmer Co., Ltd.).

Appearance before curing, and appearance, fluorine content, thermal decomposition temperature, light transmission (550 nm), solvent resistance and heat resistance of a cured article were measured in the same manner as in Example 1. The results are shown in Table 4.

### COMPARATIVE EXAMPLE 6

Physical properties were measured in the same manner as in Example 8 except that the composition (c1) was used as it was. The results are shown in Table 4.

### EXAMPLE 9

Physical properties were measured in the same manner as in Example 8 except that a composition (d1) shown below was used instead of the composition (c1) and MOI was added in an amount of 5.5 parts by mass (corresponding to 0.6 equivalent based on all hydroxyl groups in the composition) to 100 parts by mass of the composition (d1). The results are shown in Table 4.

**Composition (d1)**

| | |
|---|---|
| Polymer (d) | 50 parts by mass |
| MMA | 40 parts by mass |
| TMPA | 10 parts by mass |
| 2-Hydroxy-2-methylpropiophenone | 1 part by mass |

### COMPARATIVE EXAMPLE 7

Physical properties were measured in the same manner as in Example 8 except that the composition (d1) was used as it was. The results are shown in Table 4.

### EXAMPLE 10

Physical properties were measured in the same manner as in Example 8 except that a composition (a3) shown below was used instead of the composition (c1) and MOI was added in an amount of 2.3 parts by mass (corresponding to 0.6 equivalent based on all hydroxyl groups in the composition) to 100 parts by mass of the composition (a3). The results are shown in Table 4.

**Composition (a3)**

| | |
|---|---|
| Polymer (a) | 25 parts by mass |
| MMA | 40 parts by mass |
| TMPA | 35 parts by mass |
| 2-Hydroxy-2-methylpropiophenone | 1 part by mass |

### COMPARATIVE EXAMPLE 8

Physical properties were measured in the same manner as in Example 8 except that the composition (a3) was used as it was. The results are shown in Table 4.

### EXAMPLE 11

Physical properties were measured in the same manner as in Example 8 except that a composition (a4) shown below was used instead of the composition (c1) and MOI was added in an amount of 0.9 part by mass (corresponding to 0.6 equivalent based on all hydroxyl groups in the composition) to 100 parts by mass of the composition (a4). The results are shown in Table 4.

**Composition (a4)**

| | |
|---|---|
| Polymer (a) | 10 parts by mass |
| MMA | 50 parts by mass |
| TMPA | 40 parts by mass |
| 2-Hydroxy-2-methylpropiophenone | 1 part by mass |

### COMPARATIVE EXAMPLE 9

Physical properties were measured in the same manner as in Example 8 except that the composition (a4) was used as it was. The results are shown in Table 4.

**TABLE 4**

| | | | | | Properties of composition before curing | |
|---|---|---|---|---|---|---|
| Example number | Composition | | Amount of (A-2) (equivalent) | | Appearance | |
| Ex. 8 | c1 | | 0.6 | | O | |
| Ex. 9 | d1 | | 0.6 | | O | |
| Ex. 10 | a3 | | 0.6 | | O | |
| Ex. 11 | a4 | | 0.6 | | O | |
| Com. Ex. 6 | c1 | | - | | O | |
| Com. Ex. 7 | d1 | | - | | O | |
| Com. Ex. 8 | a3 | | - | | O | |
| Com. Ex. 9 | a4 | | - | | O | |

| | After curing | | | | | |
|---|---|---|---|---|---|---|
| Example number | Fluorine content (mass %) | Thermal decomposition temperature (°C) | Appearance | Light transmission (%) | Solvent resistance | Heat resistance |
| Ex. 8 | 11 | 251 | ○ | 72 | ○ | ○ |
| Ex. 9 | 12 | 233 | ○ | 77 | ○ | ○ |
| Ex. 10 | 6 | 241 | ○ | 88 | ○ | ○ |
| Ex. 11 | 2 | 236 | ○ | 85 | ○ | ○ |
| Com. Ex. 6 | 12 | 188 | × | 2 | Δ | × |
| Com. Ex. 7 | 13 | 201 | × | 2 | Δ | × |
| Com. Ex. 8 | 6 | 211 | × | 15 | Δ | × |
| Com. Ex. 9 | 3 | 195 | × | 17 | Δ | × |

### EXAMPLE 12

A composition (c1) was prepared according to the following formulation.

**Composition (e1)**

| | |
|---|---|
| Polymer (e) | 60 parts by mass |
| MMA | 30 parts by mass |
| 16HX | 10 parts by mass |
| 2-Hydroxy-2-methylpropiophenone | 1 part by mass |

Then, 4.3 parts by mass (corresponding to 0.5 equivalent based on all hydroxyl groups in the composition) of AOI was added as the isocyanate group-containing unsaturated compound (A-2) to 100 parts by mass of the composition (e1), followed by 24-hour reaction at 40°C.

According to measurement by infrared-absorbing analysis of the reaction product, it was confirmed that absorption of -NCO derived from the isocyanate group of AOI had disappeared and absorption of NH resulting from urethane bond was observed, which indicated that the reaction had proceeded (Measurement was carried out at room temperature with a Fourier-transform infrared spectrophotometer 1760X available from Perkin Elmer Co., Ltd.).

Appearance before curing, and appearance, fluorine content, thermal decomposition temperature, light transmission (550 nm), solvent resistance and heat resistance of a cured article were measured in the same manner as in Example 1. The results are shown in Table 5.

### EXAMPLE 13

Physical properties were measured in the same manner as in Example 12 except that a composition (e2) shown below was used instead of the composition (e1) and AOI was added in an amount of 4.3 parts by mass (corresponding to 0.5 equivalent based on all hydroxyl groups in the composition) to 100 parts by mass of the composition (e2). The results are shown in Table 5.

**Composition (e2)**

| | |
|---|---|
| Polymer (e) | 60 parts by mass |
| MMA | 30 parts by mass |
| TMPA | 10 parts by mass |
| 2-Hydroxy-2-methylpropiophenone | 1 part by mass |

### EXAMPLE 14

Physical properties were measured in the same manner as in Example 12 except that a composition (f1) shown below was used instead of the composition (e1) and AOI was added in an amount of 2.9 parts by mass (corresponding to 0.5 equivalent based on all hydroxyl groups in the composition) to 100 parts by mass of the composition (f1). The results are shown in Table 5.

**Composition (f1)**

| | |
|---|---|
| Polymer (f) | 40 parts by mass |
| MMA | 50 parts by mass |
| TMPA | 10 parts by mass |
| 2-Hydroxy-2-methylpropiophenone | 1 part by mass |

### EXAMPLE 15

Physical properties were measured in the same manner as in Example 12 except that a composition (a5) shown below was used instead of the composition (e1) and AOI was added in an amount of 3.4 parts by mass (corresponding to 0.5 equivalent based on all hydroxyl groups in the composition) to 100 parts by mass of the composition (a5). The results are shown in Table 5.

**Composition (a5)**

| | |
|---|---|
| Polymer (a) | 50 parts by mass |
| MMA | 45 parts by mass |
| Dipentaerythritol hexaacrylate | 5 parts by mass |
| 2-Hydroxy-2-methylpropiophenone | 1 part by mass |

### EXAMPLE 16

Physical properties were measured in the same manner as in Example 12 except that a composition (a6) shown below was used instead of the composition (e1) and AOI was added in an amount of 3.4 parts by mass (corresponding to 0.5 equivalent based on all hydroxyl groups in the composition) to 100 parts by mass of the composition (a6). The results are shown in Table 5.

**Composition (a6)**

| | |
|---|---|
| Polymer (a) | 50 parts by mass |
| CH₂=C(CH₃)COOCH₂CF₃ (3FMA) | 20 parts by mass |
| CH₂=C(CH₃)COOCH₂(CF₂)₃CF₂H (8FMA) | 20 parts by mass |
| TMPA | 10 parts by mass |
| 2-Hydroxy-2-methylpropiophenone | 1 part by mass |

### EXAMPLE 17

Physical properties were measured in the same manner as in Example 12 except that a composition (a7) shown below was used instead of the composition (e1) and MOI was added in an amount of 3.7 parts by mass (corresponding to 0.5 equivalent based on all hydroxyl groups in the composition) to 100 parts by mass of the composition (a7). The results are shown in Table 5.

**Composition (a7)**

| | |
|---|---|
| Polymer (a) | 50 parts by mass |
| MMA | 20 parts by mass |
| CH₂=C(CH₃)COOCH(CF₃)₂ (HFIP-MA) | 20 parts by mass |
| TMPA | 10 parts by mass |
| 2-Hydroxy-2-methylpropiophenone | 1 part by mass |

### EXAMPLE 18

Physical properties were measured in the same manner as in Example 12 except that a composition (a8) shown below was used instead of the composition (e1) and AOI was added in an amount of 3.4 parts by mass (corresponding to 0.5 equivalent based on all hydroxyl groups in the composition) to 100 parts by mass of the composition (a7). The results are shown in Table 5.

**Composition (a8)**

| | |
|---|---|
| Polymer (a) | 50 parts by mass |
| CH₂=CHCOOCH₂(CF₂)₃CF₂H (8FA) | 20 parts by mass |
| CH₂=CFCOOCH₂CF₂CF₃ (5FFA) | 20 parts by mass |
| TMPA | 10 parts by mass |
| 2-Hydroxy-2-methylpropiophenone | 1 part by mass |

### EXAMPLE 19

A composition (a9) shown below was used instead of the composition (e1) and 4.6 parts by mass (corresponding to 0.4 equivalent based on all hydroxyl groups in the composition) of Karenz BEI (hereinafter referred to as BEI) available from SHOWA DENKO K.K. was 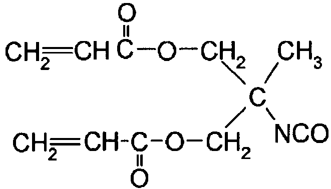 oup-containing unsaturated compound (A-2) the composition (c1), followed by 24-hour uctural formula of BEI is represented by the

### 1,1-(Bisacryloyloxymethyl)ethyl isocyanate (VIII)

Physical properties were measured in the same manner as in Example 12. The results are shown in Table 5.

**Composition (a9)**

| | |
|---|---|
| Polymer (a) | 50 parts by mass |
| MMA | 40 parts by mass |
| 16HX | 10 parts by mass |
| 2-Hydroxy-2-methylpropiophenone | 1 part by mass |

### EXAMPLE 20

Physical properties were measured in the same manner as in Example 19 except that a composition (a10) shown below was used instead of the composition (e1) and BEI was added in an amount of 9.2 parts by mass (corresponding to 0.8 equivalent based on all hydroxyl groups in the composition) to 100 parts by mass of the composition (a10). The results are shown in Table 5.

**Composition (a10)**

| | |
|---|---|
| Polymer (a) | 50 parts by mass |
| MMA | 40 parts by mass |
| TMPA | 10 parts by mass |
| 2-Hydroxy-2-methylpropiophenone | 1 part by mass |

**TABLE 5**

| | | | Before curing | | | |
|---|---|---|---|---|---|---|
| Example number | Composition | Amount of (A-2) | Appearance | | | |
| Ex. 12 | e1 | 0.5 | ○ | | | |
| Ex. 13 | e2 | 0.5 | ○ | | | |
| Ex. 14 | f1 | 0.5 | ○ | | | |
| Ex. 15 | a5 | 0.5 | ○ | | | |
| Ex. 16 | a6 | 0.5 | ○ | | | |
| Ex. 17 | a7 | 0.5 | ○ | | | |
| Ex. 18 | a8 | 0.5 | ○ | | | |
| Ex. 19 | a9 | 0.4 | ○ | | | |
| Ex. 20 | a10 | 0.8 | ○ | | | |

| | After curing | | | | | |
|---|---|---|---|---|---|---|
| Example number | Fluorine content (mass %) | Thermal decomposition temperature (°C) | Appearance | Light transmission (%) | Solvent resistance | Heat resistance |
| Ex. 12 | 17 | 245 | ○ | 81 | ○ | ○ |
| Ex. 13 | 17 | 255 | ○ | 78 | ○ | ○ |
| Ex. 14 | 13 | 260 | ○ | 82 | ○ | ○ |
| Ex. 15 | 12 | 240 | ○ | 83 | ○ | ○ |
| Ex. 16 | 29 | 232 | ○ | 76 | ○ | ○ |
| Ex. 17 | 22 | 260 | ○ | 77 | ○ | ○ |
| Ex. 18 | 33 | 245 | ○ | 78 | ○ | ○ |
| Ex. 19 | 12 | 263 | ○ | 73 | ○ | ○ |
| Ex. 20 | 12 | 265 | ○ | 74 | ○ | ○ |

### COMPARATIVE EXAMPLE 10

A curable fluorine-containing polymer having α-fluoroacryloyl group described in Experimental Example 1 of WO 02/18457 was synthesized. A solvent, i.e., diethyl ether was removed by the following steps.
1. Butyl acetate was distilled off at 40°C at 0.5 mmHg or less with a rotary evaporator.
2. Drying was carried out at 40°C at 0.5 mmHg or less for 24 hours with a vacuum desiccator.

In the vacuum drying process of the step 2, gelling of the sample occurred, and dissolution in an acrylic monomer such as MMA did not occur, and therefore, a solvent-free curable composition could not be prepared.

### COMPARATIVE EXAMPLE 11

After dissolving 50 parts by mass of the polymer (a) in 100 parts by mass of butyl acetate, 0.8 part by mass of AOI was added thereto, followed by 24-hour reaction at 40°C.

According to measurement by infrared-absorbing analysis of the reaction product, it was confirmed that absorption of -NCO derived from the isocyanate group of AOI had disappeared and absorption of NH resulting from urethane bond was observed, which indicated that the reaction had proceeded. Then, the reaction solvent, i.e., butyl acetate was removed by the following steps.
1. Butyl acetate was distilled off at 60°C at 0.5 mmHg or less with a rotary evaporator.
2. Drying was carried out at 60°C at 0.5 mmHg or less for 24 hours with a vacuum desiccator.

In the vacuum drying process of the step 2, gelling of the sample occurred, and dissolution in an acrylic monomer such as MMA did not occur, and therefore, a solvent-free curable composition could not be prepared.

### INDUSTRIAL APPLICABILITY

In the curable resin composition of the present invention, the reaction product of the fluorine-containing copolymer having hydroxyl group and the isocyanate group-containing unsaturated compound is dissolved in the acrylic monomer and the composition has a specified viscosity, and therefore, the composition can be easily cured even without being dissolved in an organic solvent and a step for removing a solvent from the obtained curable resin composition is not necessary.

Further, in preparing the curable resin composition of the present invention, since the hydroxyl group of the fluorine-containing copolymer having hydroxyl group is allowed to react with the isocyanate group of the isocyanate group-containing unsaturated compound to form urethane bond, a by-product such as salt is not generated. For that reason, a step for removing a by-product is not necessary, and this reaction can be easily conducted in the acrylic monomer.

## Claims

1. A composition, which has a viscosity at 25°C of 5-100,000 mPa.s, measured with an oscillation type viscosimeter SV-10 (Kabushiki Kaisha A&D), and which is a curable resin composition comprising
(i) an acrylic monomer (B) and, dissolved therein
(ii) a reaction product (A) of
- a copolymer (A-1)comprising a fluoroolefin unit and a radically polymerizable hydroxyl group-containing unsaturated monomer unit, and
- a compound (A-2) having one isocyanate group and at least one radically polymerizable unsaturated group; and
the composition does not contain an organic solvent not having a radically reactive group.

2. The composition of claim 1, wherein weight ratio of the reaction product (A) to the acrylic monomer (B) is 95:5 to 5:95.

3. The composition of claim 1 or 2, wherein the fluoroolefin unit in copolymer (A-1) is a tetrafluoroethylene, chlorotrifluoroethylene, vinyl fluoride, vinylidene fluoride, hexafluoropropylene, trifluoroethylene, perfluoro(methyl vinyl ether) or perfluoro(propylvinyl ether) unit, or a mixture of two or more thereof.

4. The composition of any of claims 1-3, wherein the radically polymerizable hydroxyl group-containing unsaturated monomer unit in copolymer (A-1) is a group -CH₂-CH(R¹)- wherein R¹ is hydroxyalkyl vinyl ether or hydroxyalkyl allyl ether represented by -OR² or -CH₂OR² (wherein R² is linear or branched C₁₋₈-alkyl having 1-3 hydroxyl groups bonded thereto).

5. The composition of any of claims 1-4, wherein the copolymer (A-1) further comprises a non-fluorine-containing vinyl ether unit and/or a non-fluorine-containing vinyl ester unit having no hydroxyl group.

6. The composition of any of claims 1-5, wherein the acrylic monomer (B) has one or more radically reactive group(s).

7. The composition of any of claims 1-6, wherein the radically polymerizable unsaturated group in compound (A-2) is one, two or more selected from methacryl, acryl, 2-fluoroacryl and 2-chloroacryl.

8. A process for preparing the composition of claim 1 comprising the steps of
(i) dissolving a copolymer (A-1) and a compound (A-2) as defined in claim 1 in an acrylic monomer (B) without using an organic solvent not having a radically reactive group, and
(ii) reacting copolymer (A-1) with compound (A-2) in the acrylic monomer (B).

9. The process of claim 8, wherein the copolymer (A-1) is dissolved in the acrylic monomer (B) and subsequently the compound (A-2) is added thereto and dissolved.

10. The process of claim 8 or 9, wherein the ratio of the number of isocyanate groups in compound (A-2) to the number of all hydroxyl groups in the copolymer (A-1) and the acrylic monomer (B) is 0.01:1 to 1:1.

## Patentansprüche

1. Zusammensetzung, die, gemessen mit einem Schwingplatten-Viskosimeter SV-10 (Kabushiki Kaisha A&D) bei 25°C, eine Viskosität von 5-100 000 mPa.s aufweist und eine härtbare Harzzusammensetzung ist, umfassend
(i) ein Acrylmonomer (B) und darin gelöst
(ii) ein Reaktionsprodukt (A) bestehend aus
- einem Copolymer (A-1), das eine Fluorolefin-Einheit und eine radikalisch polymerisierbare Hydroxylgruppen-haltige ungesättigte Monomer-Einheit umfasst, und
- einer Verbindung (A-2) mit einer IsocyanatGruppe und mindestens einer radikalisch polymerisierbaren ungesättigten Gruppe; und
die Zusammensetzung enthält kein organisches Lösungsmittel, das keine radikalisch reaktive Gruppe aufweist.

2. Zusammensetzung gemäß Anspruch 1, worin das Gewichtsverhältnis von Reaktionsprodukt (A) zu Acrylmonomer (B) 95:5 bis 5:95 ist.

3. Zusammensetzung gemäß Anspruch 1 oder 2, worin die Fluorolefin-Einheit in Copolymer (A-1) eine Tetrafluorethylen-, Chlortrifluorethylen-, Vinylfluorid-, Vinylidenfluorid-, Hexafluorpropylen-, Trifluorethylen-, Perfluor(methylvinylether)- oder Perfluor(propylvinylether)-Einheit oder ein Gemisch aus zwei oder mehr davon ist.

4. Zusammensetzung gemäß mindestens einem der Ansprüche 1-3, worin die radikalisch polymerisierbare Hydroxylgruppen-haltige ungesättigte Monomer-Einheit im Copolymer (A-1) eine -CH₂-CH(R¹)-Gruppe ist, worin R¹ ein durch -OR² oder -CH₂OR² dargestellter Hydroxyalkylvinylether oder ein Hydroxyalkylallylether ist (worin R² lineares oder verzweigtes C₁₋₈-Alkyl mit 1-3 daran gebundenen Hydroxylgruppen ist).

5. Zusammensetzung gemäß mindestens einem der Ansprüche 1-4, worin das Copolymer (A-1) ferner eine nichtfluorhaltige Vinylether-Einheit und/oder eine nichtfluorhaltige Vinylester-Einheit ohne Hydroxylgruppen umfasst.

6. Zusammensetzung gemäß mindestens einem der Ansprüche 1-5, worin das Acrylmonomer (B) eine oder mehrere radikalisch reaktive Gruppe(n) aufweist.

7. Zusammensetzung gemäß mindestens einem der Ansprüche 1-6, worin die radikalisch polymerisierbare ungesättigte Gruppe in Verbindung (A-2) eines, zwei oder mehr ist, ausgewählt aus Methacryl, Acryl, 2-Fluoracryl und 2-Chloracryl.

8. Verfahren zur Herstellung der Zusammensetzung gemäß Anspruch 1, das folgende Schritte umfasst:
(i) Lösen eines Copolymers (A-1) und einer Verbindung (A-2) wie in Anspruch 1 definiert in einem Acrylmonomer (B) ohne Verwendung eines organischen Lösungsmittels ohne radikalisch reaktive Gruppe, und
(ii) Reagieren von Copolymer (A-1) mit Verbindung (A-2) in dem Acrylmonomer (B).

9. Verfahren gemäß Anspruch 8, worin das Copolymer (A-1) in Acrylmonomer (B) gelöst ist und anschließend Verbindung (A-2) beigefügt und gelöst wird.

10. Verfahren gemäß Anspruch 8 oder 9, worin das Verhältnis der Anzahl der Isocyanatgruppen in Verbindung (A-2) zur Anzahl aller Hydroxylgruppen in Copolymer (A-1) und Acrylmonomer (B) 0.01:1 bis 1:1 ist.

## Revendications

1. Composition, qui présente une viscosité à 25 °C comprise entre 5 et 100 000 mPa.s mesurée avec un viscosimètre de type à oscillation SV-10 (Kabushiki Kaisha A&D), et qui consiste en une composition de résine pouvant être durcie comprenant :
(i) un monomère acrylique (B) et, dissous dans celui-ci
(ii) un produit de réaction (A) de
- un copolymère (A-1) comprenant une unité fluoro-oléfine et une unité monomère insaturée contenant un groupe hydroxyle polymérisable par voie radicalaire, et
- un composé (A-2) possédant un groupe isocyanate et au moins un groupe insaturé polymérisable par voie radicalaire; et
la composition ne contient pas de solvant organique ne possédant pas de groupe à réaction radicalaire.

2. Composition selon la revendication 1, dans laquelle le rapport massique du produit de réaction (A) sur le monomère acrylique (B) est compris entre 95:5 et 5:95.

3. Composition selon la revendication 1 ou 2, dans laquelle l'unité fluoro-oléfine dans le copolymère (A-1) consiste en une unité tétrafluoroéthylène, chlorotrifluoropropylène, fluorure de vinyle, fluorure de vinylidène, héxafluoropropylène, trifluoroéthylène, perfluoro(méthyle vinyle éther) ou perfluoro(propylvinyle éther) ou un mélange de deux ou plus de ces unités.

4. Composition selon l'une quelconque des revendications 1 à 3, dans laquelle l'unité monomère insaturée contenant un groupe hydroxyle polymérisable par voie radicalaire dans le copolymère (A-1) consiste en un groupe -CH₂-CH(R¹)-dans lequel R¹ consiste en un hydroxyalkyle vinyle éther ou un hydroxyalkyle allyle éther représenté par -OR² ou -CH₂OR² (dans lequel R² est un alkyle en C₁₋₈ linéaire ou ramifié possédant de 1 à 3 groupes hydroxyles liés à celui-ci).

5. Composition selon l'une des revendications 1 à 4, dans laquelle le copolymère (A-1) comprend en outre une unité vinyle éther ne contenant pas de fluor et/ou une unité vinyle ester ne contenant pas de fluor, ne possédant aucun groupe hydroxyle.

6. Composition selon l'une quelconque des revendications 1 à 5, dans laquelle le monomère acrylique (B) présente un ou plusieurs groupe(s) à réaction radicalaire.

7. Composition selon l'une quelconque des revendications 1 à 6, dans laquelle le groupe insaturé polymérisable par voie radicalaire dans le composé (A-2) consiste en un, deux ou plus éléments choisis parmi méthacryle, acryle, 2-fluoroacryle et 2-chloroacryle.

8. Processus pour préparer la composition selon la revendication 1, comprenant les de :
(i) dissolution d'un copolymère (A-1) et d'un composé (A-2) tels que définis dans la revendication 1 dans un monomère acrylique (B) sans utiliser de solvant organique ne possédant pas de groupe à réaction radicalaire, et
(ii) réaction du copolymère (A-1) avec le composé (A-2) dans le monomère acrylique (B).

9. Processus selon la revendication 8, dans lequel le copolymère (A-1) est dissous dans le monomère acrylique (B) et consécutivement le composé (A-2) est ajouté à celui-ci et dissous.

10. Processus selon la revendication 8 ou 9, dans lequel le rapport du nombre de groupes isocyanate dans le composé (A-2) sur le nombre de tous les groupes hydroxyle dans le copolymère (A-1) et le monomère acrylique (B) est compris entre 0,01:1 et 1:1.
